# EUROPEAN PATENT SPECIFICATION

(11) **EP 1 686 048 B1**
(45) Date of publication and mention of the grant of the patent: **02.07.2008**
(21) Application number: 06100744.9
(22) Date of filing: 24.01.2006
(51) Int. Cl.: B62D 65/02, B23K 37/04

(54) **Improvements to systems for welding sheet-metal structures, particularly motor-vehicle bodies or sub-assemblies thereof**
System zum Schweissen von aus Blech bestehenden Strukturen, insbesondere für Kraftfahrzeugkarosserien oder deren Baugruppen
Système pour souder des structures composées de tôle, notamment pour carroseries automobiles ou pour ses sous-ensembles

(30) Priority: 31.01.2005 IT TO20050053
(43) Date of publication of application: 02.08.2006
(73) Proprietor: COMAU S.p.A., 10095 Grugliasco (Torino) (IT)
(72) Inventor: Monti, Denny, 10093, Collegno (Torino) (IT)
(74) Representative: Notaro, Giancarlo

(56) References cited:
- EP-A- 0 927 598
- EP-A2- 0 642 878
- US-A1- 2003 115 746
- US-A1- 2004 070 131

## Description

The present invention relates to systems for welding sheet-metal structures, in particular motor-vehicle bodies or sub-assemblies thereof.

Document EP-A-0 927 598 describes such a system according to the preamble of the independent claim.

In particular, the invention relates to systems for framing by welding sheet-metal structures, such as car bodies or sub-assemblies thereof, of the type including at least one welding station which receives the parts to be welded, wherein welding means are providedy in form of programmable welding means, such as robots equipped with electric spot welding heads and/or laser focusing heads for laser welding, which carry out, on the structure to be welded, a number of welding spots or welding beads sufficient to confer a relatively stable geometry to the structure. When the welding operations are carried out at the aforesaid framing station, the parts to be welded are located and locked in the proper assembling position by means of locating and locking devices, whose configuration is adapted to the configuration of the specific structure on which they operate. According to a principle conceived and developed by the same applicant since more than twenty years, all the locating and locking devices intended to operate on a same type or model of structure are carried on one or more "locating frames" or "gates" which are arranged at the framing station.

In the case of a "rigid" system, intendend to operate on a single type or model of structure to be welded, locating frames of a single corresponding type are arranged. In actual embodiments, two of such frames are provided, arranged at the two sides of a line which feeds the structures to be welded to the framing station. When a new structure to be welded arrives (or is formed) at the station, it is located and locked herein after that the two locating frames have been moved closer to each other. The two frames are in fact movable between an opened condition, where they are spaced apart from each other to allow for replacement of the structure to be welded at the framing station, and a closed condition where they are brought closer to each other, by a movement of each frame in a transverse direction with respect to the longitudinal direction of the line. When a new structure to be welded arrives (or is formed) at the framing station, the two locating frames are brought in their closed condition in order to allow for all the locating and locking devices carried by the frames to engage the parts of the structure to be welded, so as to lcate them and lock them in the proper welding position.

Once the locating and locking devices of the locating frames have engaged the structure to be welded, welding means, typically robots, are activated to carry out a series of weldings sufficient to provide the structure with a relatively stable geometry. When welding is completed, the locating and locking devices moved away from the structure and the locating frames which carry such devices return to their opened condition, so as to allow the welded structure to get out from the framing station and a new structure to be welded to enter into the framing station.

As for the feeding of the structure to be welded to the framing station, various solutions are adopted. For example, in the case of stations for welding entire motor-vehicle bodies, accordiang to a first solution the entire body to be welded is fed to the framing station, through the feeding line, in a loosely assembled condition. A typical way for carrying out such loose preassembling is coupling the different parts of the structure by sheet-metal tabs protruding from some of the elements of the structure, thus leaving a slight play between the connected parts. According to a second technique for feeding the structure to be welded to the framing station, only the floor panel of the vehicle body is fed to the framing station through the feeding line, while the side panels of the vehicle body are arranged on the aforesaid locating frames, when they are still in their opened position, before the arrival of the floor panel at the framing station. In this case, when the floor panel arrives at the framing station, the locating frames bring the side panels close to the floor panel and also provide for the required coupling function. The present invention can be applied to any welding station of the above indicated type, whatever the specific embodiment might be, both with reference, for example, to the way with which the parts of the structure to be welded are fed to the framing station, and with reference to the way with which the welding itself is carried out.

Welding systems of the above-mentioned type have found a large diffusion, particularly as a consequence of a number of inventions developed by the same applicant, above all in the case of flexible systems, intended to operate on different types or models of structures to be welded. According to a basic principle conceived and developed by the applicant, multiple pairs of locating frames are provided at the framing station, which are quickly interchangeable with each other at a working position, each pair of frames being equipped with locating and locking devices adapted to a specific type or model of structure to be welded. In the case of such embodiments, the assembling line can feed, to the framing station, any sequence of different models or types of structures to be welded. Each time the station receives a structure of a type different from that on which the station has operated immediately before, the locating frames previously arranged at the working position in the framing station are quickly interchanged with another pair of locating frames, adapted to the new type of structure to be welded. Preferably, the exchange of the frames occurs in a time not longer than that required for interchanging the structure to be welded in the station, so as to not penalize the cycle time.

In the simplest case of assembly lines only intended to operate on two different types or models of structure, the station is equipped with two pairs of locating frames arranged at two sides of the line, such that on each side of the line a first locating frame, suitable for a first structure type, and a second locating frame, suitable for a second structure type, are arranged. The first and the second frames are aligned in a direction parallel to the longitudinal direction of the line and are movable along such direction so as to bring one of them in the working position and the other one in a waiting position, or vice versa. When the two locating frames of a same pair of frames arrive at the working position in the framing station, they are in the aforesaid "opened" condition, wherein they allow the replacement of the structure to be welded in the framing station. From such condition, they can then be brought to the closed condition, through a movement in a direction transversal to the line, for allowing the engagement of the locating and locking devices upon the structure to be welded. Conversely, once welding is completed, the operating locating frames are first of all brought to their opened position, through a movement in the direction transversal to the line, after which, if the new structure to be welded is of a different type, the two frames are moved in the longitudinal direction parallel to the line, for reaching their waiting position and allowing the proper frames to arrive at the working position.

As explained above, welding systems as those described have been conceived and developed since long, by the applicant. Examples of such systems are described, for instance, in US 4 256 947 and DE-A-2 810 822, and in EP-A-351377, EP-A-440001, EP-A-642878, EP-A-927598, EP-A-976491 and EP 04425422.5 (published as EP-A-1 611 991). As it appears from these documents, the movement of the locating frames, both in the direction transversal to the line at the framing station, and for the purpose of replacing a frame which is in the station with a new frame suitable to a new type of structure to be welded, can be obtained in any way. For example, possibility of displacement of the locating frames in the longitudinal direction of the line can be obtained by means of aerial conveyors, or by arranging floor rails and driving the movement of the locating frames through motors placed on board of the frames, or yet by tractor vehicles which can be hooked to the frames. Moreover, the movement required for replacing a locating frame with a locating frame of a different type at the working position in the framing station can also be obtained along directions different from the longitudinal direction of the line, in particular by means of a displacement in the vertical direction, or also by arranging rotors with multiple faces supporting the frames, rotatable around axess parallel to the longitudinal direction of the line, and arranged at the two sides of the line.

Finally, in view of multiplying the number of different types or models of structures on which the system can operate, assembling systems of the above-described type have also been proposed since long by the same applicant (see for example US-4.682.722 and GB-2.172.555), which include stores of locating frames and means for drawing any locating frame from a store and bring it to the working position in the framing station or vice versa.

Each single locating frame presents a structure which, in the practical embodiments carried out by the applicant, includes a base part, for example equipped with means for engaging fixed guiding rails, for the displacement of the locating frame in the longitudinal direction, and an upper structure which rises from the base structure and which presents a frame-shaped form defined by two vertical end columns and an upper horizontal beam which connects the two columns. These elements carry the locating and locking devices intended for engaging the structure to be welded. The above described shape of the frame is preferred, as when it is in the operating condition, with the locking devices engaged upon the structure to be welded, the space defined through the frame can be exploited by the welding robots to reach the differents parts to be welded.

The devices arranged on the locating frame are of various type. In the more conventional solution, the locking devices consist of clamping devices, with two jaws movable relative to each other between an opened position and a closed position, for locking the parts to be welded therebetween. In such conventional solution, the movement of the jaws is driven by fluid actuators. The feeding of the fluid to the actuator chambers is controlled by solenoid valves, which require an electric supply. Moreover, the locking devices are typically equipped with position sensors necessary for the control of the movement of the locking devices between the opened condition and the closed condition. Sometimes, there are also used locating frames provided with welding means on-board, such as electric spot welding heads. In this case, again, such heads require an electric supply.

It is also possible that the locking devices on the locating frames are driven by electric actuators, for example in form of electric motors which drive the movement of the jaws of the locking devices through screw-and-nut transmission systems. Again, in this case, it is required an electric supply. This applies, of course, also when on the base structure of the locating frame there is a motor which drives the movement of the frame or part of it.

In the known welding systems in which a driving motor is provided on board the locating frame to drive the movement of the frame, the electric supply locating frame to the motor is carried out for example through a supply line fixed to the floor which is engaged by sliding contacts arranged on the locating frame. When, on the contrary, the frame movement is obtained, for example, by arranging a tractor vehicle which can be hooked to the frame, a supply system completely similar to that described above is used for supplying the electric motor of the tractor vehicle. In still more conventional systems, cables for the electric supply to the locating frame are arranged, guided through chain-like cable guiding systems which allow for proper unwinding of the cables during the movements of the frame.

Also in the conventional systems, when a locating frame arrives at the working position in the framing station, the electric supply to the appliances aboard (together with the feeding of the fluid to the fluid actuators, if any, arranged on the frame) is obtained by a mechanical coupling between a stationary connector, arranged at the station, and a connector movable with the frame.

In the known systems, finally, all the aforesaid electric connections are also exploited for the connections required for the transmission of input and output control signals between an electronic control unit, which is associated to the assembling system, and the different controlled devices, which are provided on each locating frame.

A basic problem which has been found in designing the locating frames of the type described above is to render their structure the simplest possible and with a reduced hindrance, as this improves the possibility of access from the welding robots to the structure to be welded when the locating frames are in their working position upon the structure. A greater difficulty of access from the robots to the structure to be welded involves an increase of the time cycle and a consequent productivity decrease, as each welding robot arranged at the station has to perform relatively complicated and time-consuming movements for going from a previously welded area to a new area to be welded. On the other hand, there is a limit to the increase of the number of welding robots which simultaneously operate on the same structure to be welded in the station, both for cost reasons and as the robots tend to hamper each other during welding if they are in an excessive number.

The aim of the present invention is to provide a welding system and in particular a locating frame which offer a better solution to the various technical problems mentioned above.

In particular, an object of the invention is to provide a locating frame of simple construction which further allows a substantial simplification of the plant in which it is used.

These and further objects and advantages are achieved according to the invention through a system according to claim 1.

Further advantageous features of the invention are disclosed in the dependent claims.

The invention will be now described with reference to the annexed drawings, which are given purely by way of not limitative example, wherein:
figure 1 is a perspective view of an example of A welding system according to the present invention,
figure 2 is a diagrammatic perspective view of a locating frame according to the present invention, and
figures 3A, 3B diagrammatically show the system for high current power supply to the electric devices on board the locating frame.

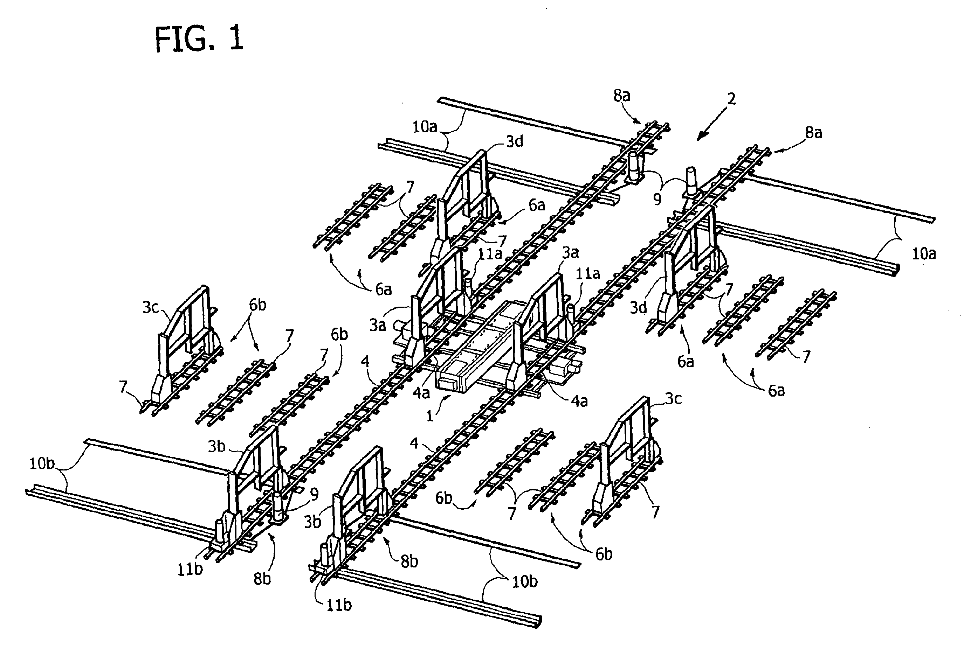

Figure 1 shows an example of application of the present invention to a welding system of the type which has formed the subject of European patent application EP 04425422.5 of the same Applicant.

In the following, the description of the general structure of the system of figure 1, as presented also in European application EP 04425422.5, is presented.

The system includes a welding station 1 placed along a suitable conveying line, only diagrammatically represented and indicated by arrow 2, used for moving the bodies to be welded through the welding station 1. The station 1 is not shown in detail, as it has an entirely known conception, except for some specific aspects, which will be described in the following. The welding equipments provided at station 1 are robots of any known type, whose control unit includes a series of different operating programs, selected as a function of the type of body (car model) to be welded.

The conveying line 2 and the means for obtaining the displacement of the bodies along the same can be of any known type. These details have not been shown in the annexed drawings, as they do not lie within the scope of the present invention; moreover, their deletion from the drawings renders these latter easier to understand. Also, it is clearly apparent that the body to be welded can be formed in any way at the welding station. For example, the body can be completely loosely pre-assembled upstream the welding station. Otherwise, the various sub-assemblies forming the body can be carried from the conveying line 2 to the welding station in a not yet assembled condition, the assembly before welding being carried out at the station itself. Or also, the conveying line 2 can only carry part of the body, for example the floor panel, to the welding station, in which case the body is completed at the welding station, adding the remaining components of the body to the floor panel. Finally, the system of the invention can of course be used for welding only a subassembly of a car body, or again in theory any other type of welded sheet-metal structure intended to be manufactured in different types or patterns or versions. Whatever the way with which the body is assembled, it is required to lock each part of the body in a precise position, when the body is subjected to the welding operations at station 1. Such locking is obtained through locating and locking tools carried by pairs of side frames or gates operatively interchangeable one another, shown by 3a, 3b, 3c and 3d in figure 1, slidable on longitudinal lower rails or guides 4; where not strictly required for the purposes of the detailed description of the operation of the system according to the invention, the side frames or gates 3a,3b,3c and 3d will be identified in the following by the only numeral 3.

In the exemplified case, the guides 4 extend themselves parallel to the conveying line 2 of the bodies and are directly fixed to the ground, except for a respective intermediate portion thereof, shown by 4a, placed at the welding station 1. The portion 4a of the guides 4 are movable in a direction substantially perpendicular to the longitudinal direction of the guides themselves, in order to bring the side frames 3 of the pair in use at the welding station 1 in the respective closed condition.

The pairs of side frames 3 can be displaced along the guides **4,** so as to bring to the welding station 1 a pair of side frames corresponding to the type of car body to be welded. When a body of a type different from the one on which the welding station has operated immediately before arrives at station 1, the pair of side frames which is in the station can be rapidly replaced by sliding in the respective guides 4, as it will become apparent in the following.

For this purpose, in the exemplified case, two stores of frames are arranged, each including a series of locations 6a, 6b arranged on the two sides of the conveying line 2 and the guides 4, where each location includes a guide section 7, of a shape similar to the guides or rails 4 and therefore suitable for slidably supporting a corresponding side frame. In the exemplified case, the guide sections 7 extend themselves substantially parallel relative to the guides 4.

In the example shown, on each side of the conveying line 2 two stores are provided, each including three different locations 6a,6b, which corresponds to a maximum total number of six different types of frames 3 intended to operate on as many body types. Of course, however, the two stores can be provided with any number of parking locations, with the limits which will be show in the following.

The different frames 3 carry, in a way known per se, respective locating and locking tools, not shown, suitable to engage the side and upper parts of the car body, so as to lock them in a precise position during the execution of the welding operations at station 1. The lower part of the body is instead locked through further locating and locking tools arranged on the lower part of the welding station 1. Each pair of side frames 3 is, in particular, equipped with locating and locking tools adapted to the particular configuration of a respective type or model of car body.

In the use of the system, on the guides 4 there are placed a first pair of side frames 3, which are in the working position, since they are adapted to the model of car body which is at the welding station 1, and a second pair of frames 3, which are in a waiting position, since they correspond to the model of body immediately following that being welded. When this latter body enters the welding station 1, the first frames 3 are brought to their waiting position and the second frames 3 are brought to the working position.

In the example shown, at the two longitudinal ends of the guides 4, respective movable guide elements 8a, 8b are provided, with a shape similar to that of the guides 4. The movable elements 8a,8b are equipped with respective motor and transmission means 9, for being able to laterally move themselves, for example on respective pairs of rails 10a,10b, in a perpendicular direction relative to the longitudinal direction of guides 4, between a first position and a plurality of second positions. In the aforesaid first position, each movable element 8a,8b is longitudinally aligned with a respective guide 4, so as to form a sort of extension thereof. Through the aforesaid side displacement, each element 8a,8b can be brought to a respective parking location 6a,6b, i.e. to a guide section 7.

Still in the shown example, the displacement of the side frames 3 of the different pairs is obtained by means of independent tractors, each of which is adapted to cooperate with different side frames 3, so as to take them from a respective location 6a or 6b and bring them in the operational position at station 1, and vice versa. In the case shown in figure 1, two pairs of tractors, designated by 11a and 11b, are provided, which can be selectively coupled to the different frames, in a way which will be described in the following.

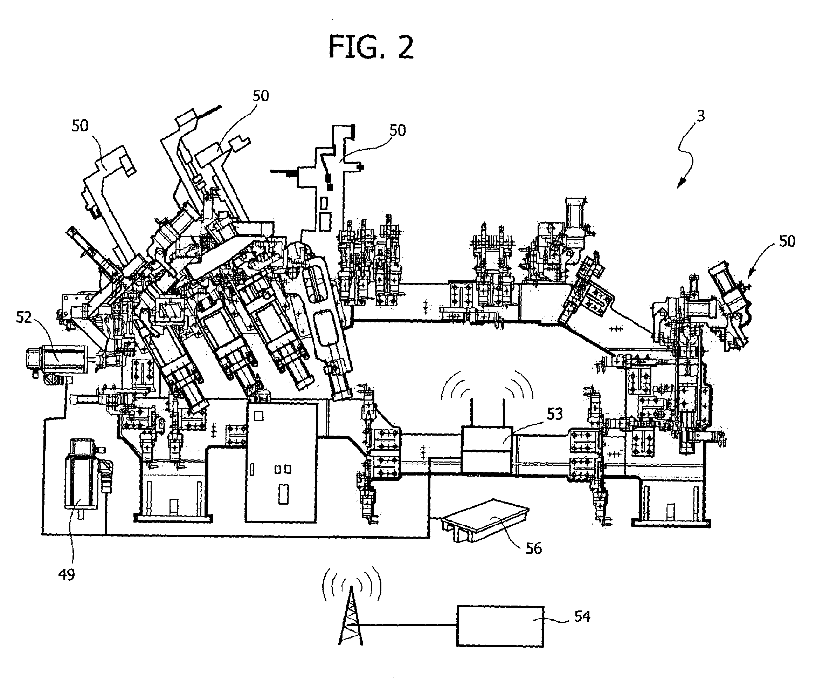

Referring to figure 2, a locating frame 3 is equipped with a plurality of locating and locking devices 50 of any type per se known. The locating and locking devices 50 can be provided either with air actuators (in which case air control solenoid valves are also associated therewith), or with electric actuators. To the locking devices there are further associated, in a way known per se, position sensor devices (not shown) for sensing the position of the movable locking clamps.

In the example described herein, the frame can also be arranged with one or more heads for electric spot welding (not shown). Moreover the frame has a separate movable part which can be displaced by an electric actuator 52, to adapt the frame to car bodies which are slight different from each other (such as, for example, in the case of the sedan version and the station wagon version of a same model of car body). Also in the case of the example shown, the locating frame is further equipped with an electric motor 49 intended to drive, for example, a gear wheel (not shown) intended to engage with a stationary rack arranged along the floor of the plant or intended for driving a wheel which friction-engages a track arranged along the floor, for the purpose of obtaining the advancement of the frame. Such solution is a possible alternative to what has been described with reference to the system of figure 1, where the advancement of the locating frame is assigned to an independent tractor.

The system includes a high current power supply and a connection for the transmission of the input and ouput control signals to the on-board equipments of the locating frame.

According to the invention, the transmission of the control signals is accomplished with a wireless technique, through the arrangement of a wireless communication port on the locating frame, diagrammatically shown and designated by 53, for the communication with a stationary electronic control unit 54, which provides for the control of the plant.

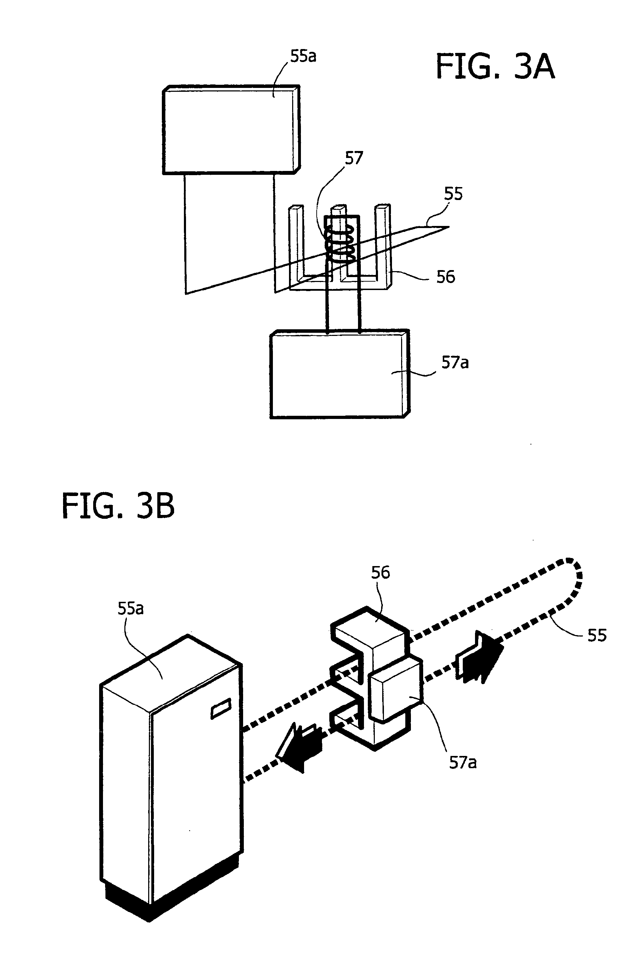

According to a further preferred feature of the invention, the high current power supply is obtained by a contactless magnetic induction connection system, , which is shown in figures 3A,3B. Such system includes a stationary floor supply line, with a supply conductor 55, which in the example shown is U-shaped and presents two parallel branches, supplied by a primary generator 55a. A pick-up element 56 carried by the frame 3 has an "E"-shaped cross-section and is arranged astraddle, but without contact, of the two branches of the conductor 55 of the supply line. The element 56 is equipped with a coil 57 which is supplied by induction and leads to a secondary controller 57a.

The choice of the aforesaid features allows a remarkable simplification of the plant according to the invention as for the electric supply means to the equipments in the locating frame, as well as a simplification and a reduction of the hindrance of the elements carried by the frame.

Of course, the invention is applicable whatever is the general architecture of the welding system, and in particular whatever is the technology selected for moving the locating frame between the working position in the framing station and its rest position for example at a store of locating frames. From this point of view, it is not excluded that the displacement of the locating frame is carried out by a robot of adequate dimensions, having an equipment for grasping the locating frame.

The absence of electric cables connected or mechanically coupled to the locating frame allows for the conception of new and advantageous embodiments of the welding system.

Thus, the invention provides for the possibility of having a locating frame which is in an "off" condition when it is in its rest position a the store of the system. When the locating frame is taken from such position in order to bring it to an intermediate, waiting position close to the framing station, wherein it is arranged for being subsequently brought to the working position, the power electric supply to the frame apparatus is activated through the contactless magnetic induction system including the floor supply track and the pick-up device arranged on the locating frame. When the locating frame arrives to the working position, the wireless communication is started for the control of the devices carried by the frame during its operating stage.

Therefore, as it can be seen, not only a remarkable simplification of the locating frame structure and the whole assembly system is obtained, thanks to the invention, but also new perspectives are opened for the conception of the aforesaid systems, thanks to the greater design flexibility for the entire plant, allowed by the absence of cables mechanically connected to the locating frame. As already shown above, the motion with which each locating frame is moved in the plant can be anyone, including the case in which a robot of adequate dimensions provides for such movement with a grasp structure of the frame.

Naturally, while the principle of the invention remains the same, the details of construction and the embodiments may widely vary with respect to what has been described and shown by mere way of example, without departing from the scope of the present invention, as defined by the following claims.

For example, it is to be noted that the teachings of the invention can be similarly applied also when the welding means are replaced with clinching or hemming or glueing means. From the point of view of the teachings of the invention, in fact, welding and other operations such as clinching, hemming and glueing are completely equivalent therebetween.

## Claims

1. System for welding sheet-metal structures, in particular motor-vehicle bodies or sub-assemblies thereof, including:
at least a welding station (1) which receives the structures to be welded,
programmable welding means, arranged at the welding station (1),
a plurality of locating and locking devices (50) adapted for engaging parts of the structure to be welded in order to locate and lock them in the proper welding position,
at least a locating frame (3) carrying at least some of said locating and locking devices (50),
wherein said locating frame (3) is movable between a first operating position, where the locking devices carried thereon are able to engage the structure to be welded, and a second operating position, wherein the locating frame (3) allows for a replacement of the structure which is at the welding station,
wherein the locating frame (3) is further movable between said second operating position and a waiting position, for allowing a different locating frame (3) to be brought to said second operating position,
**characterized in that** said system further includes at least a programmable electronic control unit (54), which controls the movement of the locating frames (3) and the actuation of the devices carried by said frames (3), by controlling electric devices carried on board the locating frames (3), and **in that** all electric devices on board each locating frame (3) are connected to stationary control and/or supply units by wireless and/or contactless connection means.

2. Welding system according to claim 1, **characterized in that** the locating frame (3) is further movable between the aforesaid waiting position and a storage position at a store of locating frames located remote from the welding station.

3. Welding system according to claim 1, **characterized in that** each locating frame is equipped with a wireless communication port (53) for the communication of input and output control signals between one or more electric equipments on the locating frame and a stationary electric control unit (54).

4. Welding system according to claim 3, **characterized in that** the system includes power supply means for power supply to one or more electric equipments that are on the locating frame, comprising a contactless supply system including a stationary electric supply track (55), arranged along the path of movement of the locating frame, and one or more electric induction pick-up devices (56) carried by the locating frame and movable with no contact along the supply track (55).

## Patentansprüche

1. System zum Schweißen von Aufbauten aus Metallblech, im Besonderen von Karosserien von Kraftfahrzeugen oder Baueinheiten davon, wobei das System aufweist:
zumindest eine Schweißstation (1), die jene Aufbauten erhält, die geschweißt werden sollen,
programmierbare Schweißeinrichtungen, die in der Schweißstation (1) angeordnet sind,
eine Vielzahl von Einstell- und Verriegelungseinrichtungen (50), die so aufgebaut sind, dass sie mit Teilen des Aufbaus, der geschweißt werden soll, in Eingriff treten, um sie einzustellen und sie in der richtigen Schweißstellung zu verriegeln,
zumindest einen Montagerahmen (3), der zumindest einige der Einstell- und Verriegelungseinrichtungen (50) trägt,
wobei der Montagerahmen (3) zwischen einer ersten Arbeitsstellung, in der die an ihm befestigten Verriegelungseinrichtungen mit dem zu schweißenden Aufbau in Eingriff treten können, sowie einer zweiten Arbeitsstellung bewegbar ist, in der der Montagerahmen (3) einen Ersatz des Aufbaus ermöglicht, der sich in der Schweißstation befindet,
wobei der Montagerahmen (3) weiters zwischen der zweiten Arbeitsstellung und einer Wartestellung bewegbar ist, um zu ermöglichen, dass ein anderer Montagerahmen (3) in die zweite Arbeitsstellung gebracht wird,
**dadurch gekennzeichnet, dass** das System weiters zumindest eine programmierbare elektronische Steuereinheit (54) aufweist, die die Bewegung der Montagerahmen (3) sowie die Betätigung der Einrichtungen, die auf den Rahmen (3) befestigt sind, dadurch steuert, dass sie elektrische Einrichtungen steuert, die an Bord der Montagerahmen (3) angebracht sind, und dass alle elektrischen Einrichtungen, die sich an Bord eines jeden Montagerahmens (3) befinden, mit einer ortsfesten Steuer- und/oder Anspeise-Einheit über drahtlose und/oder berührungslose Anschlusseinrichtungen verbunden sind.

2. Schweißsystem gemäß Anspruch 1, **dadurch gekennzeichnet, dass** der Montagerahmen (3) weiters zwischen der oben erwähnten Wartestellung und einer Abstellplatzstellung in einem Abstellplatz für Montagerahmen bewegbar ist, der von der Schweißstation entfernt angeordnet ist.

3. Schweißsystem gemäß Anspruch 1, **dadurch gekennzeichnet, dass** jeder Montagerahmen mit einem drahtlosen Kommunikationseingang (53) ausgestattet ist, um Eingangs- und Ausgangs-Steuersignale zwischen einem oder mehreren elektrischen Geräten auf dem Montagerahmen und einer ortsfesten elektrischen Steuereinheit (54) zu übertragen.

4. Schweißsystem gemäß Anspruch 3, **dadurch gekennzeichnet, dass** das System eine Stromversorgungseinrichtung aufweist, um ein oder mehrere elektrische Geräte mit Strom zu versorgen, die sich auf dem Montagerahmen befinden, wobei die Stromversorgung ein berührungsloses Anspeisesystem enthält, das eine ortsfeste elektrische Anspeisebahn (55), die entlang der Bewegungsbahn des Montagerahmens angeordnet ist, sowie ein oder mehrere elektrische induktive Abgreifeinrichtungen (56) aufweist, die auf dem Montagerahmen angeordnet und berührungslos entlang der Anspeisebahn (55) bewegbar sind.

## Revendications

1. Système pour souder des structures en tôle, en particulier des carrosseries automobiles ou ses sous-ensembles, comprenant :
au moins un poste de soudage (1) qui reçoit les structures devant être soudées,
des moyens de soudage programmables disposés sur le poste de soudage (1),
une pluralité de dispositifs de positionnement et de verrouillage (50) adaptés à l'engagement de pièces de la structure devant être soudée dans le but de les positionner et de les verrouiller dans la position de soudage appropriée,
au moins un cadre de positionnement (3) portant au moins certains des dits dispositifs de positionnement et de verrouillage (50),
dans lequel ledit cadre de positionnement (3) peut être déplacé entre une première position opérationnelle, dans laquelle les dispositifs de verrouillage qu'il porte sont capables d'engager la structure devant être soudée, et une seconde position opérationnelle, dans laquelle le cadre de positionnement (3) tient compte d'un remplacement de la structure qui est sur le poste de soudage,
dans lequel le cadre de positionnement (3) peut de plus être déplacé entre ladite seconde position opérationnelle et une position d'attente pour permettre à un cadre de positionnement (3) différent d'être amené à la dite seconde position opérationnelle,
**caractérisé en ce que** ledit système comprend en outre au moins une unité de commande électronique programmable (54) qui commande le mouvement des cadres de positionnement (3) et l'actionnement des dispositifs portés par lesdits cadres (3), en commandant des dispositifs électriques portés, embarqués des cadres de positionnement (3), et **en ce que** tous les dispositifs électriques embarqués de chaque cadre de positionnement (3) sont connectés aux unités de commande et/ou d'alimentation stationnaires par des moyens de connexion sans fil et/ou sans contact.

2. Système pour souder selon la revendication 1, **caractérisé en ce que** le cadre de positionnement (3) peut en outre être déplacé entre la position d'attente susmentionnée et une position d'emmagasinage à un magasin de cadres de positionnement situé à distance du poste de soudage.

3. Système pour souder selon la revendication 1, **caractérisé en ce que** chaque cadre de positionnement est équipé d'un port de communication sans fil (53) pour la communication de signaux de commande d'entrée et de sortie entre un ou plusieurs équipements électriques sur le cadre de positionnement et une unité de commande électrique stationnaire (54).

4. Système pour souder selon la revendication 3, **caractérisé en ce que** le système comprend des moyens d'alimentation en énergie pour l'alimentation en énergie d'un ou plusieurs équipements électriques qui sont sur le cadre de positionnement, comprenant un système d'alimentation sans contact incluant une voie d'alimentation électrique stationnaire (55), disposée le long de la trajectoire de déplacement du cadre de positionnement, et un ou plusieurs dispositifs de capteur d'induction électriques portés par le cadre de positionnement et pouvant se déplacer sans contact le long de la voie d'alimentation (55).
